# EUROPEAN PATENT SPECIFICATION

(11) **EP 2 535 185 B1**
(45) Date of publication and mention of the grant of the patent: **23.11.2016**
(21) Application number: 12172167.4
(22) Date of filing: 15.06.2012
(51) Int. Cl.: B32B 27/34, B32B 27/36, B65D 1/34

(54) **Multilayer film made of recyclable plastic material, container comprising said film and related package**
Mehrschichtige Folie aus recycelbarem Kunststoffmaterial, Behälter mit der besagten Folie und zugehörige Verpackung
Film multicouche constitué de matière plastique recyclable, récipient comprenant ledit film et emballage associé

(30) Priority: 16.06.2011 IT MI20111088
(43) Date of publication of application: 19.12.2012
(73) Proprietor: Point Plastic S.r.l., 03012 Anagni (FR) (IT)
(72) Inventor: Severini, Tonino, 00034 Colleferro (RM) (IT)
(74) Representative: Zanoli, Enrico

(56) References cited:
- WO-A2-03/080731
- US-A- 5 318 810

## Description

The present invention relates to a multilayer film made of recyclable thermoplastic material, to a container comprising this film and to a package formed by this container and by a top film, or cover. More in particular, the invention relates to a multilayer film, to the container produced with this film and to a package comprising it, each provided with suitable characteristics of transparency and oxygen and carbon dioxide (CO₂) barrier for advantageous use in the preservation of food products, particularly in a modified atmosphere, also capable of being fully recycled after use.

The market of foods for large-scale retail (supermarket chains and the like) requires increasingly sophisticated packaging and packing materials, above all to increase the preservability of these foods and the aesthetic quality of the packages, for example with regard to the transparency of the container.

One of the technical requirements of the food retail market is that of having available packages formed by a tray, or container, and by a top film or cover, which offer a suitable barrier to prevent oxygen from entering the tray to preserve the quality of the product contained therein, usually vegetables and cheeses, for a time corresponding to the expiry date indicated on said package. This parameter is defined as "shelf life".

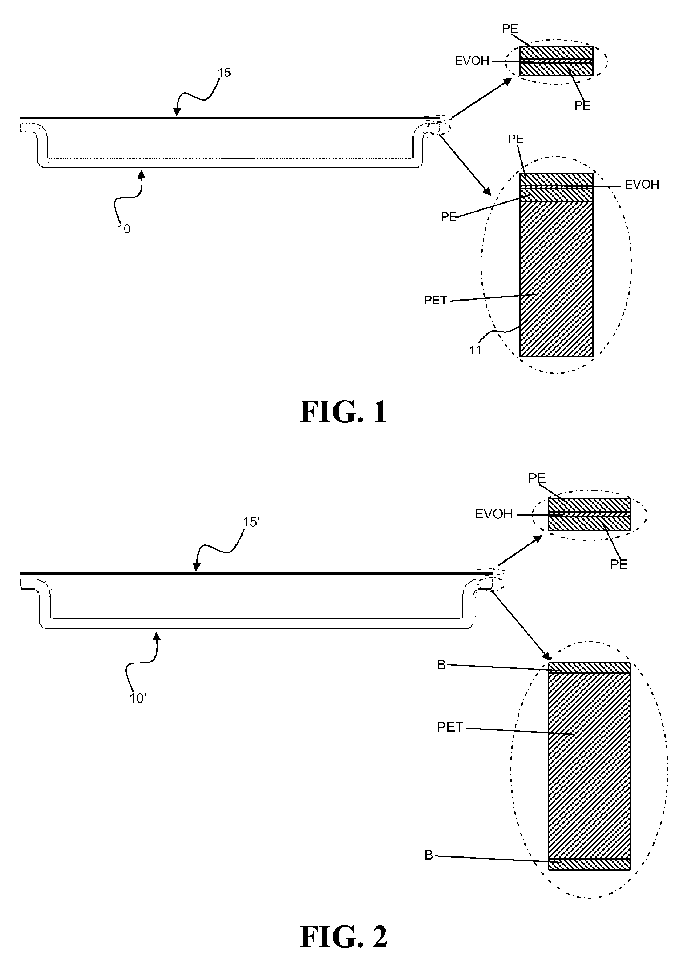

A known package commonly used on the market, illustrated schematically in Fig. 1, is formed by a multilayer container 10 having a total thickness of 330 micron, comprising a substrate 11 having a thickness of 280 micron of PET (single or three-layer), to which there is applied a three-layer laminated film PE/EVOH/PE, having a total thickness of 50 micron (22 micron + 6 micron + 22 micron). In some cases the laminated film in PE/EVOH/PE with a thickness of 50 micron is replaced by a film in PE/PA/PE (21 micron + 8 micron + 21 micron), where PA means polyamide.

In other embodiments an inorganic based coating (i.e. silicon oxides), deposited on the PET substrate through plasma processes and/or using solvent, or an organic based coating (PVDC) deposited on the PET substrate through solvent lacquering processes, is used to provide adequate barrier properties that cannot be guaranteed by PET.

In these known packages the top film - referring to Fig. 1 the cover 15 of the container 10 - has a total thickness of around 50 micron, and is of the three-layer type PE/EVOH/PE (22 micron +6 micron + 22 micron). In some cases the top film in PE/EVOH/PE with a thickness of 50 micron can be replaced by a five-layer film of the type PE/Ad/PA/Ad/PE (18 micron + 3 micron + 8 micron + 3 micron + 18 micron), where Ad represents an adhesive layer.

It is clear from examination of the aforesaid structures that both for the container and for the top film or cover the oxygen barrier is obtained by the polymer fraction EVOH or PA, which are known for their high efficiency in blocking the passage of oxygen in order to improve preservation of the food product contained therein. It is also clear that the structure of the two components of the package, namely the container and the cover, is such that closing of the package is obtained by contact between the PE layers, which are heat-sealed PE on PE in order to guarantee a good degree of closing and seal.

This known package has numerous disadvantages.

With regard to the container, the three-layer lamination film in PE/EVOH/PE (or five-layer PE/Ad/PA/Ad/PE) can delaminate from the PET substrate if the hot lamination process is used, and in any case the risk of critical delamination represents a problem. Alternatively, it is possible to use bonding processes with adhesives, which however increase the number of components in the formulation of the container and often require the use of chemical solvents for deposition of said adhesive.

Moreover, the package is not perfectly transparent due to the presence of PE, EVOH and PA and possible adhesives.

Other drawbacks of the package relate to environmental aspects and to the management of scrap during the production process of said packages. These drawbacks mainly derive from the fact that the packages comprise different plastic materials, i.e. they are packages produced using the "multi-material" approach (PET; PE, EVOH and/or PA with related adhesives; plus any other components or additives). The multi-material nature in fact poses strict limitations to effective and advantageous recycling both of production scrap and of the package itself at the end of its useful life, or even makes this practically impossible, due to the presence of plastic materials that are incompatible with one another. The term "recycle" is intended as the possibility of effective reuse of the material, for example by melting and subsequent molding into a new product, generally a new container and/or top film to reuse in the same application. The limitations to recycling due to the multi-material nature are discussed below.

In the case of the known package described above, the application of a three-layer lamination film on the PET substrate of the container offers satisfactory oxygen barrier properties but it is known that the chemical-physical characteristics of EVOH (melt point, thermal stability, refraction index, etc.) are such that EVOH cannot be treated in the production process at the same extrusion temperatures as PET (280-290°C), as this causes thermal degradation, decoloration and the formation of black carbonaceous points due to the excessive temperature to which the EVOH polymer fraction was exposed. Moreover, these undesired effects, combined with the presence of PE not miscible with PET, tend to cause a substantial opacity in the final foil.

The use of inorganic based coatings deposited on the PET substrate, although in theory having high barrier performances, have drawbacks relating to low actual barrier properties, as these inorganic coatings are very fragile (they create a film of vitreous material). Consequently, at the time of use in the machine, the static and dynamic stresses to which the materials are subjected tend to create "cracks" on the coating layer, triggering points with low oxygen barrier which, in fact, cannot guarantee the required performances in all conditions of use.

The use of organic based coatings (PVDC) deposited on the PET substrate has the drawbacks associated with the presence of chlorinated compounds, which are not well accepted by the market and in general are difficult to recycle, particularly together with PET.

With regard to the top film or cover, it is made of polymer material different than PET, and therefore it exhibits the compatibility drawbacks described above.

It must also be considered that the production process to form the container in various shapes and dimensions, such as cups, trays and boxes with approximately cylindrical or parallelepiped geometry, and the related covers, implies the formation of considerable quantities of scrap, which it would be desirable to recycle in the same application, but which for the aforesaid reasons cannot be reused. Naturally, this is also the case for recycling and reuse of the package at the end of its life.

Therefore, these objects with multi-material composition can only be recycled and reused for relatively low-cost applications, or in any case in applications less noble than the primary application, in which transparency, aesthetic quality and technological properties such as oxygen barrier are not required, for example for garden chairs, tables and other objects obtained by injection molding. Otherwise, these materials are disposed of in refuse incinerators, causing a waste of raw material and a high environmental impact.

The packaging and preservation of food products in a modified atmosphere ("MAP" = Modified Atmosphere Packaging) was introduced into the large scale retail market to protect the organoleptic properties of foods, in particular meats and above all red meats, and to extend their shelf-life. Normally, the modified atmosphere is composed of a mixture of oxygen and carbon dioxide and/or nitrogen, with prevalent oxygen content (up to 70-80% by weight of the mixture).

Contrary to what was stated above, where the oxygen barrier is intended as a barrier to prevent oxygen from entering the package, MAP packages should ensure a barrier to prevent oxygen from escaping from the inside of the package, to allow the modified atmosphere to be maintained and to extend the shelf-life to at least two weeks.

US 5,021,515 describes an oxygen barrier packaging comprising a layer capable of scavenging oxygen through the metal-catalyzed oxidation of an oxidizable organic component thereof The oxidizable organic component preferred is a polyamide obtained from apidic acid and m-xylylenediamine known as MXD-6. Oxidation of MXD-6 is catalyzed by compounds of transition metals, in particular compounds of cobalt, present in amounts up to 300 ppm. US 6,239,210 B1 describes structures formed by mixtures of PET and MXD-6 with the addition of cobalt octoate to be used as oxygen barrier containers for the preservation of food products. The cobalt compound is present in amounts up to 250 ppm.

The materials described in the aforesaid patents are therefore of the active barrier type, where the term "active barrier" is intended as a barrier also based on oxygen scavenging through reaction with the material itself. Therefore, it is evident that the active barrier causes oxygen consumption if this is contained inside the package. These materials are therefore unsuitable for use in MAP packages with oxygen rich atmosphere as they react with it, undesirably reducing the quantity of oxygen initially present.

WO 03/080731 discloses compatibilized polyester/polyamide blends. Compatibilizers include variously modified PET, acrylic-modified polyolefin ionomers and bis-phenol resins. The presence of these modifiers particularly when the material is recycled into a new application may be disadvantageous, for example it may reduce the optical quality of the article made from recycled materials.

Therefore, at the state of the art indicated above the problem of providing an unoriented film in thermoplastic material to produce a container which is completely recyclable in the same application and which offers an adequate passive oxygen barrier, such as to make it suitable to preserve foods in modified atmosphere packages has still not been solved, or has been only partially solved.

Therefore, it would be desirable to obtain containers and packages, above all for foods, which associate the required technological properties (good oxygen and CO₂ barrier, good transparency, absence of metal residues) with the possibility of effective recycling of the material in the same application, i.e. without loss of value in applications subsequent to the primary application, both as regards production scrap and in relation to the packages themselves at the end of their life.

An aspect of the invention therefore concerns a multilayer film made of recyclable thermoplastic material comprising at least three layers, characterized by the fact that at least one layer (A) of said three layers consists essentially of unoriented amorphous PET and is combined with at least a passive barrier layer (B) comprising unoriented amorphous PET and from 1 to 20 wt.% of a polyamide substantially free of oxidation catalysts, wherein:
i) said unoriented amorphous PET layer (A) forms each of the external layers of said three-layer film and the central layer is formed by said passive barrier layer (B) (structure A/B/A); or
ii) said unoriented amorphous PET layer (A) forms the central layer of said three-layer film and each of the external layers is formed by said passive barrier layer (B) (structure B/A/B);
the weight ratio between said central layer and the sum of said external layers being > 1, said multilayer film comprising at least 90% by wt. of unoriented amorphous PET and having a permeability to oxygen (*Oxygen Transmission Rate* "OTR") of less than 7 cc/m²/24h/atm and a permeability to carbon dioxide ("CO₂TR") of less than 12 cc/m²/24h/atm. and a Haze value of less than 10%, said barrier layer (B) comprising unoriented amorphous PET and a polyamide being substantially free of compatibilizers of the PET with the polyamide.

Another aspect of the invention relates to a container comprising a multilayer film as defined above.

The passive barrier layer (B) comprising unoriented amorphous PET and a polyamide is also substantially free of compatibilizers of the PET with the polyamide. The term "compatibilizers" means the compatibilizers described in WO 03/080731, including the variously modified PET, acrylic-modified polyolefin ionomers and bis-phenol resins.

Yet another aspect of the invention relates to a package formed by a container of this type and by a top film, or cover, heat-sealable on said container.

In the present description, the term "PET" means the polyester homopolymer obtained by polycondensation of terephthalic acid and ethylene glycol or also with presence of isophtatlic acid up to 5% mole in substitution of terephtalic acid.

The polyester used can either be virgin PET or PET obtained through recycling, and has an intrinsic viscosity greater than 0.55 dl/g. The virgin PET has an intrinsic viscosity that is generally greater than 0.76 dl/g, while the recycled PET has an intrinsic viscosity that is generally less than 0.76 dl/g, due to partial degradation caused by the recycling process. Typical intrinsic viscosity values for commercially used PETs are 0.78 dl/g for virgin PET and 0.72 dl/g for recycled PET. The fraction of PET coming from the primary extrusion process used as recycled portion can have an IV of between 0.57 and 0.67 dl/g.

Preferably, the PET obtained from recycling is comprised in the central layer of the multilayer film.

The term "multilayer film" or "three-layer film" is intended as a semi-finished product formed by the foil ("preform") generally obtained by co-extrusion of the films forming the single layers followed by hot lamination of these directly inside the co-extrusion line.

In the present description, the term "multilayer film" or "foil" are therefore usable interchangeably. The foil thus obtained has not undergone any preferential orientation process and is therefore unoriented.

The foil is then transformed into a finished article such as a container by means of known processes that do not cause orientation, generally by means of thermoforming. The term "container" is intended as any article having an opening for introducing a product, particularly a food product. Examples of containers are therefore trays, tubs, boxes, bowls, cups and the like.

The container described above is mainly used as component of a package, the other component of which is a top film to be applied on the opening of the container, so as to prevent spillage of the product and ensure its preservation. The top film can be flexible or can be formed as a rigid or semi-rigid cover. According to an aspect of the invention, the top film is heat-sealable on the container.

The multilayer film according to the invention is formed by at least 90% by wt. of PET, a wholly recyclable thermoplastic material by means of melting and forming of a new product with the production processes typical of plastic materials.

The multilayer film is preferably formed by three layers obtained by co-extrusion and/or subsequent lamination.

In the embodiment in which the multilayer film is a three-layer film, it comprises a central layer with predominant weight percent and two external layers with lower weight percent with respect to the central layer, i.e. the ratio in weight between the central layer and the sum of the external layers is > 1. The central layer preferably forms at least 70% by wt. of the three-layer film, more preferably at least 85% by weight of the total three-layer film. Preferably, the two external layers have the same composition and the same percentage incidence on the total of the film. As the difference in density between the material forming the central layer and the material forming the lateral layers is negligible, the thickness of the external films can be considered substantially identical, and therefore the film exhibits a symmetrical cross section both as regards structure and composition.

According to another embodiment, the two external layers have a different composition and optionally a different percentage incidence on the total of the film.

According to a first embodiment, the three-layer film has a structure type A/B/A, in which A is the film forming each of the external layers and is essentially formed by unoriented amorphous PET, while B forms the central layer that ensures an adequate passive oxygen and CO₂ barrier and comprises unoriented amorphous PET and a polyamide substantially free of oxidation catalysts.

According to an embodiment, the three-layer film has a structure type B/A/B, in which A is the film essentially formed by unoriented amorphous PET, while the barrier film B forms each of the external layers and comprises unoriented amorphous PET and a polyamide substantially free of oxidation catalysts.

Due to its composition, the barrier layer B is capable of ensuring a high passive barrier against the passage of oxygen and CO₂ and of maintaining adequate transparency. The term "passive barrier" is intended as a substantially physical barrier against the passage of oxygen and CO₂, i.e. a barrier that is not determined by a reaction of the oxygen with the material forming said barrier.

The polyamide of the layer B is selected in the group of the partially aromatic polyamides in which the amide bond contains at least an aromatic ring and a non-aromatic group.

Preferred partially aromatic polyamides include: poly(m-xylylene adipamide); poly(hexamethylene isophthalamide); poly(hexamethylene adipamide-co-isophthalamide); poly(hexamethylene adipamide-co-terephthalamide); poly(hexamethylene isophthalamide-co-terephthalamide); or mixtures of two or more of these. The most preferred is poly(m-xylylene adipamide).

A polyamide in conformity with the above is marketed by BASF AG with the name X17. The polyamide of the layer B is present in an amount from 1% to 20% by wt. of the total composition of the layer, preferably from 5% to 15% by wt., more preferably from 7 to 12% by wt. of the total composition of the layer.

The term "polyamide substantially free of oxidation catalysts" is intended as a polyamide without, or with less than 10 ppm of, metal compounds with a catalytic action in the oxidation of the polyamide by the oxygen present in the atmosphere in contact with said polyamide, such as the compounds of transition metals, in particular of cobalt. Any metal residues deriving from the catalysts or initiators employed in the production of said polyamide for polymerization of the starting monomers or non-catalytic metal compounds are not included in the exclusion clause contained in the definition above.

The polymer compositions of the layer A or B can, moreover, comprise additives selected from thermal and UV stabilizers, antiblock agents, antioxidants, antistatic agents, antifogging agents, sealants, fillers and other agents known to those skilled in the art. The additives can be added in the polymerization processes or in subsequent conversion steps. The film B, both in the embodiment in which it forms the central layer of the multilayer film and in the embodiment in which it forms the external layers, comprises an amount of unoriented amorphous PET greater than 60% by wt. of the total composition of the layer B, preferably greater than 70% by wt., even more preferably greater than 80% by wt. of the total composition of the layer B. In the various embodiments, one of the external layers of the film is preferably made of PETG to improve the sealing properties of said film.

According to a preferred embodiment, the barrier film B comprises additives consisting of crystalline minerals with a plate-shaped structure having plates of micrometric or nanometric size and high length/width ratio L/wm, called "aspect ratio". Preferably the L/w ratio or these minerals is greater than 200, more preferably than 300. Examples of these minerals are bentonites or montmorillonites. A particularly preferred additive is the nanofiller Montmorillonite NANOCOR Grade I.24TL having a L/w ratio = 350.

Preferably, the barrier film B comprises an amount of these additives ranging from 0.1 to 8% by wt.

In any case, as stated previously, in its entirety the three-layer film according to the invention comprises at least 90% by wt. of unoriented PET and has a permeability to oxygen (*Oxygen Transmission Rate* "OTR") of less than 7cc/m²/24h/atm, preferably less than 5 cc/m²/24h/atm, more preferably less than 4 cc/m²/24h/atm. Moreover, the film has a permeability to carbon dioxide ("CO₂TR") of less than 12 cc/m²/24h/atm, preferably less than 10 cc/m²/24h/atm, more preferably less than 8 cc/m²/24h/atm.

In its entirety, the three-layer film according to the invention has a Haze level of less than 10%, preferably less than 8%, even more preferably less than 5%.

The container made of the multilayer film described above can be associated with a top film or cover, thus forming a closed package suitable for preserving food products.

In the closed package according to the invention also the top film is a multilayer film provided with a good oxygen and carbon dioxide barrier. In this case, the layer of the cover destined to be applied to the container is made of PET or higly modified Co-PET or PETG with adequate oxygen barrier properties, so that contact between container and cover is obtained by means of a surface of the same material (PET, higly modified Co-PET or PETG on PET) and heat-sealing is easily obtained due to the same melting point of the material. According to an embodiment, the package comprises a container according to the invention as defined above and a top film of know type, as long as provided with good passive oxygen and carbon dioxide barrier properties, high PET content and having a structure in which the side destined to be connected to the container is formed by PET, highly modified Co-PET or PETG. A top film suitable for this purpose is, for example, a four-layer PET or PETG/PE/EVOH/PE film, with the layer of PET, highly modified Co-PET or PETG which forms the layer in contact with the container.

Another aspect of the invention relates to a three-layer oriented film having the same structure A/B/A or B/A/B as the three-layer film described above in relation to the container. With respect to the three-layer film described previously in relation to the container, the film according to the invention has been subjected to an orientation process, giving rise to an oriented film, in particular mono- or bi-oriented. With regard to the chemical composition of this oriented film, the qualitative and quantitative description of the structures described above in relation to the film forming the container is applied.

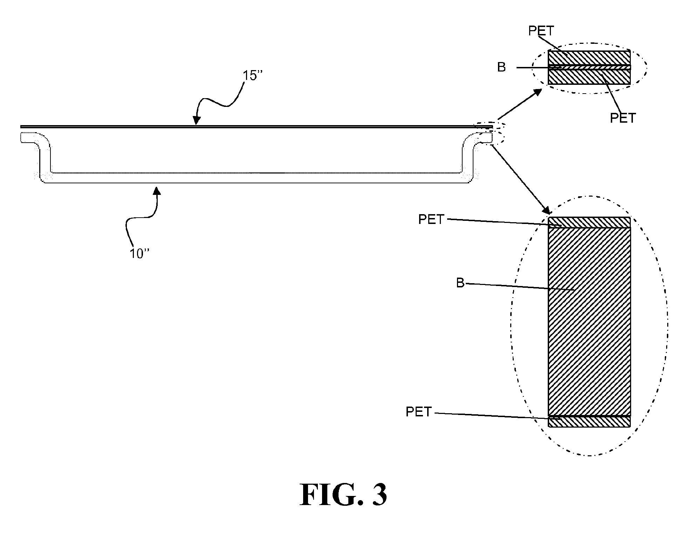

Therefore, an aspect of the invention also relates to a package comprising a container as described above to which an oriented top film having the same structure A/B/A or B/A/B as the three-layer film described above in relation to the container is applied. A package of this type is illustrated in Fig. 3, where 10" indicates the container and 15" indicates the top film, both having a structure A/B/A.

More in particular, the package according to the invention comprises an amount of PET ≥ 90% and the top film has a permeability to oxygen (*Oxygen Transmission Rate* "OTR") of less than 7cc/m²/24h/atm, preferably less than 5 cc/m²/24h/atm, more preferably less than 3 cc/m²/24h/atm. Moreover, this film exhibits a shrinkage from 1.5 to 6%.

### BRIEF DESCRIPTION OF THE DRAWINGS

The following figures are attached to the present description by way of illustration:
- Fig. 1 is an exploded schematic view of a package according to prior art;
- Figs. 2 and 3 are exploded schematic views of packages according to the invention.

Some illustrative and non-limiting examples of the invention, and some examples for comparison, are provided below.

### EXAMPLES

### Measurement methods

The analytical tests were performed according to the following standards:
- Intrinsic viscosity: ASTM D 4603-86
- Luminous transmittance measurement (HAZE): ASTM-D-1003
- Color measurement: according to the method CIELAB color determination system
- OTR (Oxygen Transmission Rate) and CO₂TR (CO₂ Transmission Rate) barrier tests for the foil and the film: DIN 53380 (all measured within 7 days of production of the foils and of the trays)
- OTR and CO₂TR Barrier tests for the package: ASTM F1307-2 (gas evolution measurements).

### Equipment used

The equipment used to perform the production tests of the PET foil described below was composed of:
- Primary extruder: co-rotating twin-screw; screw diameter 60mm
- L/D extruder screws: 44 equipped with 2 degassing ports for removing moisture
- 5 gravimetric dosers for the various components of the formulations
- 1 gear pump
- 1 filter changer with 40 micron filter mesh
- 1 flat head die width 600mm for producing the three-layer film (A/B/A or B/A/B with ratio by wt. percentage 5/90/5)
- 1 vertical calender with 3 rollers
- 1 unwinder for laminating a film on the foil
- Side extruder (coex): single screw diameter 40mm; L/D screw 36; equipped with 1 degassing port
- 1 mill for grinding the PET foils produced.

### Example 1 (for comparison)

### Production of a virgin PET foil as is as reference

A foil composed of 3 layers was produced, the central layer of which composed of a virgin PET having an intrinsic viscosity (IV) of 0.78 dl/g (INVISTA resin grade 1101) and two lateral layers composed of the same material (structure A/A/A). The material was fed to the extruders without preliminary drying. This was carried out during the production process with the aid of the degassing areas, which enable the moisture present in the PET to be removed, ensuring a good stability of the final IV. The operating conditions used during the test were:
Primary extruder for production of the central layer: T₁=260°C/T₂=270°C/T₃=280°C/T₄ =280°C/T₅=280°C/T₆=280°C/T₇=280°C/ Tₚᵤₘₚ=280°C/ T_{filter}=280°C/T_{die}=275°C/ T_{calender rollers} =35°C/ residual vacuum level in the degassing areas 1 and 2 respectively 35 and 20 mbar/ polymer flow rate 200 kg/h/ screw revolutions 189 rpm.

Secondary coex extruder for producing the external layers: T1 255°C/T2-T3-T4-T5-T6 280°C/ residual vacuum level in the degassing area: 15 mbar/ polymer flow rate 20 kg/h/ screw revolutions 23.

The final foil had the characteristics indicated in Table 1.

### Example 2 (comparison)

### Production of a foil with recycled PET in the central layer

Example 2 was carried out in the same operating conditions as example 1, but using a PET plate obtained from the recycling circuit (PETALO DENTIS grade A) having an intrinsic viscosity of 0.75 dl/g to produce the central layer of the foil. The final foil had the characteristics indicated in Table 1.

### Example 3 (comparison)

### Production of a foil laminated with PE/EVOH/PE film with barrier characteristics

Example 3 was carried out in the same operating conditions as example 1. The foil was subsequently laminated in the calender to a barrier film with a thickness of 50 micron (Type BF05HPL produced by ITP) having the following characteristics: thickness 50 micron; three-layer PE/EVOH/PE 22/8/22 micron; OTR 1.9 cc/m²/24h/atm

The final foil had the characteristics indicated in Table 1.

### Example 4 (comparison)

### Production of a foil with active barrier central layer (A/Bₐ /A)

A foil was produced with the structure of the foil of example 1, in which the central layer in virgin PET was substituted by an active barrier layer Bₐ containing PET and polyamide MXD-6 according to the description provided in example 6 of the patent US 5.021.515, having a cobalt content of 200 ppm with respect to the polyamide. The central layer Bₐ therefore contained 6% by wt. of masterbatch polyamide + cobalt Siccatol and 94% by wt. of PET. The external layers A/A were formed by virgin PET. The foil was thermoformed and the characteristics are indicated in Table 1.

### Example 5 (comparison)

### Production of a expanded polystyrene (PS) foil laminated with PE/EVOH/PE film with barrier characteristics

Example 5 was performed using a Berstorff tandem extruder capable of producing expanded materials through the addition of butane gas into the polymer material.

The extrusion conditions are indicated below.
Primary extruder cylinder temperature: 200°C; 200°C; 200°C; 190°C; 190°C.
Temperature and number of revolutions of gear pump inserted between primary and secondary extruder: 200°C/ 28 rpm
Secondary extruder cylinder temperature: 180°C; 170°C; 170°C; 160°C; 160°C
Extrusion head temperature: 160°C
Die pressure: 101 bar
Gas: butane concentration 3.8%
Expanded material density: 80 kg/m³
Raw material: PS BASF
Hourly PS flow rate: 45 kg/h
Final grammage of foil after lamination with PE/EVOH/PE film with a thickness of 50 micron: 280 g/m²

The final foil had the characteristics indicated in Table 1.

**TABLE 1**

| Characteristics of foil of comparison examples 1-5 | | | | | |
|---|---|---|---|---|---|
| Characteristics/ Unit of measurement | **EX. 1** | **EX. 2** | **EX. 3** | **EX. 4** | **EX. 5** |
| Foil thickness (µm) | 330 | 330 | 330 | 330 | 4000 (280 g/m²) |
| IV (dl/g) | 0.700 | 0.685 | 0.664 | 0.645 | ------ |
| Color (L) | 94.17 | 93.18 | 92.23 | 90.56 | |
| (a) | -0.67 | -0.84 | -0.32 | -0.12 | ------ |
| (b) | -2.72 | -0.17 | +1.74 | +2.40 | |
| Haze (%) | 1.9 | 2.0 | 2.3 | 9 | not transparent |
| OTR (cm³/m²/24h/atm) | 13.2 | 13.2 | 2.3 | 2.3 | 1.9 |
| CO₂TR, cm3, m2, 24h). | 55 | 54 | 9 | 9.2 | 9.1 |
| Visual appearance of foil | good | good | good | good | good |
| Non-PET material (PE/EVOH/PA) (%) | 0 | 0 | 11.76 | 5 | 100 |
| Recyclability | Good | Good | At the limit | Good | Not good |

### Examples 6-10 (comparison)

### Evaluation of the oxygen evolution from inside a trax

The foils according to examples 1-5 were thermoformed in an Illig thermoformer equipped with a 3-step heating oven to allow correct heating of the foil before molding of the tub. The temperatures used to heat the foil in the thermoforming step in examples 1-4 were:
- Top oven: all set at 180°C;
- Bottom oven all set at 170°C;
- Water cooled mold at a temperature of 13°C;
- Number of cycles per minute = 22

Due to the nature of the material (expanded) the foil of example 5 was thermoformed using the following parameters:
- Top oven: all set at 180°C;
- Bottom oven all set at 170°C;
- Water cooled mold at a temperature of 13°C;
- Number of cycles per minute = 22.

After production, all the trays were closed using a PE/EVOH/PE barrier film with a thickness of 50 micron (Type BF05HPL produced by ITP). A modified atmosphere was created inside the tray through the addition of CO₂ and O₂ to obtain the following concentrations of the 2 gases: 60% O₂ and 40% CO₂.

The closed tubs containing a modified atmosphere as stated above were placed in a thermostatically controlled refrigerator at 4°C and the concentration of oxygen and CO₂ present inside the tub was measured after 7 and 14 days.

The results of these measurements are indicated in Table 2.

**TABLE 2**

| Gas evolution test | | | | | |
|---|---|---|---|---|---|
| Characteristics/ Unit of measurement | **EX. 6 from foil Ex. 1** | **EX. 7 from foil Ex. 2** | **EX. 8 from Foil Ex.3** | **EX. 9 from foil Ex. 4** | **EX. 10 from Foil Ex. 5** |
| Initial measurement | | | | | |
| O₂% | 60 | 60 | 60 | 60 | 60 |
| CO₂% | 40 | 40 | 40 | 40 | 40 |
| Measurement after 7 days | | | | | |
| O₂ % | 45 | 44 | 59 | 38 | 59 |
| CO₂% | 25 | 23 | 38 | 22 | 37 |
| Measurement after 14 days | | | | | |
| O₂% | 18 | 17 | 57 | 11 | 56 |
| CO₂% | 11 | 9 | 35 | 9 | 33 |

The measurements indicated in Table 2 shows that, as already stated, the packages obtained from foils incorporating an EVOH barrier film (examples 8 and 10) maintained good concentrations of O₂ and CO₂ inside the tray with respect to the initial concentrations. On the contrary, the packages of examples 6 and 7 exhibited a considerable reduction in the initial concentrations of O₂ and CO₂. The package according to example 9, notwithstanding the patent US 5.021.515 describes a film made of MXD-6 with the addition of 200 ppm of cobalt Siccatol as a formulation with high barrier performances with respect to oxygen, proved to be not effective for the application in question. Moreover, the CO₂ barrier capacities were also poor.

### Example 11

### Production of a unoriented PET foil containing poly(m-xylylene adipamide) in the central layer.

A foil composed of 3 layers was produced, the central layer of which was composed of 90% of virgin PET having an intrinsic viscosity (IV) of 0.78 dl/g (INVISTA resin grade 1101) and of 10% of poly(m-xylene-adipamide), produced by BASF grade X-17. The two lateral layers were composed of virgin PET (structure A/B/A). The material was fed to the extruders without preliminary drying. This was carried out during the production process with the aid of the degassing areas, which enabled the moisture present in the PET to be removed, ensuring a good stability of the final IV. The operating conditions used during the test were:
Primary extruder for production of the central layer: T₁=260°C/T₂=270°C/T₃=280°C/T₄ =280°C/T₅=280°C/T₆=280°C/T₇=280°C/ Tₚᵤₘₚ=280°C/ T_{filter}=280°C/T_{die}=275°C/ T_{calender rollers} =35°C/ residual vacuum level in the degassing areas 1 and 2 respectively 35 and 20 mbar/ polymer flow rate 200 kg/h/ screw revolutions 189 rpm.
Secondary coex extruder for producing the external layers: T₁=255°C/T₂-T₃-T₄-T₅-T₆=280°C/ residual vacuum level in the degassing area: 15 mbar/ polymer flow rate 20 kg/h/ screw revolutions 23.

The final foil had the characteristics indicated in Table 3.

### Example 12

### Production of an unoriented PET foil containing poly(m-xylene-adipamide) in the external layer

A foil composed of 3 layers (5/95/5%) was produced, the central layer of which was composed only of virgin PET having an intrinsic viscosity (IV) of 0.78 dl/g (INVISTA resin grade 1101) and the two lateral layers were composed of 90% poly(m-xylene-adipamide) BASF X-17 and 10% of virgin PET (structure A/B/A). The material was fed to the extruders without preliminary drying. This was carried out during the production process with the aid of the degassing areas, which enabled the moisture present in the PET to be removed, ensuring a good stability of the final IV. The operating conditions used during the test were:
Primary extruder for production of the central layer: T₁=260°C/T₂=270°C/T₃=280°C/T₄ =280°C/T₅=280°C/T₆=280°C/T₇=280°C/ Tₚᵤₘₚ=280°C/ T_{filter}=280°C/T_{die}=275°C/ T_{calender rollers} =35°C/ residual vacuum level in the degassing areas 1 and 2 respectively 35 and 20 mbar/ polymer flow rate 200 kg/h/ screw revolutions 189 rpm.
Secondary coex extruder for producing the external layers: T₁=255°C/T₂-T₃-T₄-T₅-T₆=280°C/ residual vacuum level in the degassing area: 15 mbar/ polymer flow rate 20 kg/h/ screw revolutions 23.

The final foil had the characteristics indicated in Table 3.

### Example 13

Production of an unoriented PET foil containing poly(m-xylene-adipamide) in combination

### with nanofiller in the central layer

A foil composed of 3 layers was produced, the central layer of which was composed of 89% of virgin PET having an intrinsic viscosity (IV) of 0.78 dl/g (INVISTA resin grade 1101), of 10% of poly(m-xylene-adipamide) BASF X-17 and of 1% of nanofiller Montmorillonite NANOCOR Grade I.24TL with L/w of 350. The L/W ratio between length and width of the single nanometric particle after exfoliation expresses the aspect ratio of the nanofiller used. The two lateral layers were formed by virgin PET (structure A/B/A). The material was fed to the extruders without preliminary drying. This was carried out during the production process with the aid of the degassing areas, which enabled the moisture present in the PET to be removed, ensuring a good stability of the final IV. The operating conditions used during the test were:
Primary extruder for production of the central layer: T₁=260°C/T₂=270°C/T₃=280°C/T₄ =280°C/T₅=280°C/T₆=280°C/T₇=280°C/ Tₚᵤₘₚ=280°C/ T_{filter}=280°C/T_{die}=275°C/ T_{calender rollers} =35°C/ residual vacuum level in the degassing areas 1 and 2 respectively 35 and 20 mbar/ polymer flow rate 200 kg/h/ screw revolutions 189 rpm.
Secondary coex extruder for producing the external layers: T₁=255°C/T₂-T₃-T₄-T₅-T₆=280°C/ residual vacuum level in the degassing area: 15 mbar/ polymer flow rate 20 kg/h/ screw revolutions 23.

The final foil had the characteristics indicated in Table 3.

**TABLE 3**

| Characteristics of foil examples 11-12-13 | | | |
|---|---|---|---|
| Characteristics/ Unit of measurement | **EXAMPLE 11** | **EXAMPLE 12** | **EXAMPLE 13** |
| Foil thickness (µm) | 330 | 330 | 330 |
| IV (dl/g) | 0,702 | 0,689 | 0,712 |
| Color (L) | 93,11 | 92,99 | 89,78 |
| (a) | -0,58 | -0,77 | -1,20 |
| (b) | -2,55 | -0,89 | 1,12 |
| Haze (%) | 2,2 | 2,4 | 3,9 |
| O₂TR (cm³/m²/24h/atm) | 2,8 | 3,1 | 1,1 |
| CO₂TR (cm³/m²/24h/atm) | 7,4 | 7 | 4,8 |
| Visual appearance of foil | good | good | good |
| Non PET material (PE/EVOH/PA) (%) | 8.1 | 8.1 | 9 |
| Recyclability | Good | Good | good |

### Examples 14-16

### Evaluation of the oxygen evolution inside a tray

The foils according to examples 11, 12 and 13 were thermoformed in an Illig thermoformer equipped with a 3-step heating oven to allow correct heating of the foil before molding of the tub. The temperatures used to heat the foil in the thermoforming step were:
- Top oven: all set at 180°C;
- Bottom oven: all set at 170°C;
- Water cooled mold at a temperature of 13°C;
- Number of cycles per minute = 22

After production, all the trays were closed using a PE/EVOH/PE barrier film with a thickness of 50 micron (Type BF05HPL produced by ITP).

A modified atmosphere was created inside the tray through the addition of CO₂ and O₂ to obtain the following concentrations of the 2 gases: 60% O₂ and 40% CO₂.

The tubs were placed in a thermostatically controlled refrigerator at 4°C. The concentration of O₂ and CO₂ present inside the tub was measured after 7 and 14 days.

The results of these measurements are indicated in Table 4.

**TABLE 4**

| Gas evolution test | | | |
|---|---|---|---|
| Characteristics/ Unit of measurement | **EX. 14 from foil Ex. 11** | **EX. 15 from foil Ex.12** | **EX. 16 from Foil Ex. 13** |
| Initial measurement | | | |
| O₂ % | 60 | 60 | 60 |
| CO₂% | 40 | 40 | 40 |
| Measurement after 7days | | | |
| O₂% | 57 | 58 | 59 |
| CO₂% | 36 | 36 | 38 |
| Measurement after 14 days | | | |
| O₂% | 54 | 55 | 59 |
| CO₂% | 33 | 32 | 37 |

The data in Table 4 show the efficacy of the barrier formulations produced, even greater in the presence of nanofillers.

Experimentation continues through demonstration that the trays according to the patent can be recycled in relation to products currently on the market

### EXAMPLES OF RECYCLING

The trays according to examples 8 (or comparison), 11, 12 and 13 were ground in a TRIA mill model 32-25TDSL. Plates were produced, and subsequently used in a percentage of 25% in relation to the rest of the formulation to produce a new foil as described below.

### Example 17

### Production of a foil containing 25% of recycled material from Example 8

A foil exactly as described in example 8 was produced, with the sole difference that the polymer mixture was composed of 75% virgin PET INVISTA 1101 and of 25% recycled foil according to example 8. It was found that it was not possible to produce a foil with this formulation, as the presence of EVOH as recycled component dramatically affected the possibility of correct extrusion of a foil as the melt delivered to the extrusion die was very fluid (low viscosity) and of milky color.

### Example 18

### Production of a foil containing 25% of recycled material obtained from Example 11

The foil in question was produced using the process according to example 11, with the sole difference that the central layer contained the following mixture of material:
- 65% virgin PET INVISTA 1101
- 25% recycled PET according to Example 11
- 7.5% of poly(m-xylene-adipamide) (BASF grade X-17)

### Example 19

### Production of a foil containing 25% of recycled material obtained from Example 12

The foil in question was produced using the process according to example 12, with the sole difference that the central layer contained the following mixture of material:
- 75% virgin PET INVISTA 1101
- 25% recycled PET according to Example 12

### Example 20

### Production of a foil containing 25% of recycled material obtained from Example 13

The foil in question was produced using the process according to example 13, with the sole difference that the central layer contained the following mixture of material:
- 64% virgin PET INVISTA 1101
- 25% recycled PET according to Example 13
- 7.5% poly(m-xylene-adipamide) (BASF grade X-17)
- 1% nanoclay (NANOCOR grade I.24TL)

All the foils according to examples 17,18, 19 and 20, the characteristics of which are indicated in Table 5, were subsequently thermoformed in an Illig thermoformer equipped with a 3-step heating oven to allow correct heating of the foil before molding of the tub. The temperatures used to heat the foil in the thermoforming step were:
- Top oven: all set at 180°C;
- Bottom oven all set at 170°C;
- Water cooled mold at a temperature of 13°C;
- Number of cycles per minute = 22

After production, all the trays were closed using a PE/EVOH/PE barrier film with a thickness of 50 micron (Type BF05HPL produced by ITP).

A modified atmosphere was created inside the tray through the addition of CO₂ and O₂ to obtain the following concentrations of the 2 gases: 60% O₂ and 40% CO₂.

The closed tubs were placed in a thermostatically controlled refrigerator at 4°C and the concentration of oxygen and CO₂ present inside the tub was measured after 7 and 14 days. Table 5 indicates the data relating to the foil produced with the recycled material.

Table 6 indicates the data relating to oxygen and CO₂ evolution detected on the tubs examined.

**TABLE 5**

| Characteristics of foil examples 17-18-19-20 | | | | |
|---|---|---|---|---|
| Characteristics/ Unit of measurement | EXAMPLE 17 | EXAMPLE 18 | EXAMPLE 19 | EXAMPLE 20 |
| Foil thickness (micron) | | 330 | 330 | 330 |
| IV (dl/g) | | 0.678 | 0.665 | 0.687 |
| Color (L) | | 90.88 | 88.13 | 88.51 |
| (a) | | -0.27 | -0.12 | -1.00 |
| (b) | | -0.32 | 1.13 | 1.23 |
| Haze (%) | | 2.6 | 3.3 | 4.1 |
| O2TR (cm3/m2/24h/atm) | | 3.0 | 1.9 | 1.2 |
| CO2TR (cm3/m2/24h/atm) | | 7.1 | 4.9 | 5.0 |
| Visual appearance of foil | CANNOT be produced | good | good | good |

**TABLE 6**

| Gas evolution test | | | | | |
|---|---|---|---|---|---|
| Characteristics/ Unit of measurement | | EXAMPLE 17 With recycled material from foil Ex.8 | EXAMPLE 18 With recycled material from foil Ex.11 | EXAMPLE 19 With recycled material from foil Ex.12 | EXAMPLE 20 With recycled material from foil Ex.13 |
| Initial measurement | O2% | nil | 60 | 60 | 60 |
| | CO2% | | 40 | 40 | 40 |
| Measurement after 7 days | O2 % | nil | 59 | 58 | 59 |
| | CO2% | | 35 | 38 | 39 |
| Measurement after 14 days | O2 % | nil | 56 | 57 | 58 |
| | CO2% | | 33 | 36 | 37 |

### Examples 21-27 (comparison)

### Production of a foil with active barrier central layer (A/Bₐ /A)

Foils were produced with a structure of the foil of example 4, in which the cobalt content with respect to the polyamide in the active barrier layer Bₐ varied from 100 to 10 ppm. The external layers A/A were formed by virgin PET. The foils were thermoformed, then tubs were produced in a modified atmosphere as described in examples 14-16, on which gas leakage was measured (gas evolution test). The results are indicated in Table 7:

**TABLE 7**

| Gas evolution test | | | | | | | |
|---|---|---|---|---|---|---|---|
| Characteristics/ Unit of measurement | **EX. 21** | **EX. 22** | **EX. 23** | **EX. 24** | **EX. 25** | **EX. 26** | **EX. 27** |
| Co content (ppm) | 100 | 50 | 30 | 20 | 15 | 10 | 5 |
| Initial measurement 0 | | | | | | | |
| O₂ % | 60 | 60 | 60 | 60 | 60 | 60 | 60 |
| CO₂ % | 40 | 40 | 40 | 40 | 40 | 40 | 40 |
| Measurement after 7 days | | | | | | | |
| O₂ % | 44 | 44 | 43 | 38 | 48 | 59 | 60 |
| CO₂% | 25 | 24 | 26 | 21 | 24 | 39 | 38 |
| Measurement after 14 days | | | | | | | |
| O₂ % | 19 | 17 | 23 | 11 | 23 | 55 | 54 |
| CO₂% | 12 | 9 | 8 | 9 | 13 | 34 | 35 |

The tests showed that the activity of the active barrier generated by catalysis by the Cobalt is exhibited when this is present in the mixture in concentrations above 10 ppm.

## Claims

1. Multilayer film made of recyclable thermoplastic material comprising at least three layers, **characterized by** the fact that at least one layer (A) of said three layers consists essentially of unoriented amorphous PET and is combined with at least a passive barrier layer (B) comprising unoriented amorphous PET and from 1 to 20 wt.% of a polyamide substantially free of oxidation catalysts, wherein:
i) said unoriented amorphous PET layer (A) forms each of the external layers of said three-layer film and the central layer is formed by said passive barrier layer (B) (structure A/B/A); or
ii) said unoriented amorphous PET layer (A) forms the central layer of said three-layer film and each of said external layers is formed by said passive barrier layer (B) (structure B/A/B);
the weight ratio between said central layer and the sum of said external layers being > 1, said multilayer film comprising at least 90% by wt. of unoriented amorphous PET and having a permeability to oxygen *(Oxygen Transmission Rate* "OTR") of less than 7 cc/m²/24h/atm, a permeability to carbon dioxide ("CO₂TR") of less than 12 cc/m²/24h/atm and a Haze value of less than 10 %, said passive barrier layer (B) comprising unoriented amorphous PET and a polyamide being substantially free of compatibilizers of the PET with the polyamide.

2. Multilayer film according to claim 1, **characterized by** the fact that said central layer is at least 60% by wt. of the three-layer film, preferably at least 80% by wt. of the three-layer film.

3. Multilayer film according to claim 1, **characterized by** the fact that in said barrier layer (B) said polyamide is present in an amount from 5% to 15% by wt., preferably from 7% to 12% by wt.

4. Multilayer film according to claim 1, **characterized by** the fact that said polyamide is a partially aromatic polyamide in which the amide bond contains at least an aromatic ring and a non-aromatic group.

5. Multilayer film according to claim 1, **characterized by** the fact that said barrier layer (B) comprises additives consisting of crystalline minerals with a plate-shaped structure having plates of micrometric or nanometric size and a length/width ratio L/w ≥ 200, present in an amount from 0.1 to 8% by wt.

6. Multilayer film according to claim 1, **characterized by** a permeability to oxygen ("OTR") of less than 5 cc/m²/24h/atm and a permeability to carbon dioxide ("CO₂TR") of less than 10 cc/m²/24h/atm.

7. Container comprising a multilayer film according to any of claims 1-6.

8. Package comprising the container of claim 7 and a top film heat-sealable on said container.

9. Package according to claim 8, **characterized by** the fact that said top film comprises a PET , highly modified Co-PET or PETG layer in contact with said container.

10. Package according to claim 8, **characterized by** the fact that the amount of PET is ≥ 90% by wt. and said top film has a permeability to oxygen ("OTR") of less than 7cc/m²/24h/atm, preferably less than 5 cc/m²/24h/atm, more preferably less than 3 cc/m²/24h/atm.

11. Package according to claim 10, **characterized by** the fact that said top film is a multilayer film (three-layer/five-layer film) according to any of claims 1 - 6.

12. Package according to claim 8, **characterized by** the fact that said top film has a Haze value of less than 10 %.

## Patentansprüche

1. Mehrschichtiger Film aus wiederverwertbarem thermoplastischem Material, der zumindest drei Schichten aufweist, **dadurch gekennzeichnet, dass** zumindest eine Schicht (A) von den drei Schichten im Wesentlichen aus richtungslosem amorphem PET besteht und mit zumindest einer passiven Barriereschicht (B) kombiniert ist, die richtungsloses amorphes PET und zwischen 1 und 20 Gewichtsprozent eines Polyamids, das im Wesentlichen frei von Oxidationskatalysatoren ist, aufweist, wobei:
i) die richtungslose amorphe PET-Schicht (A) jede von den äußeren Schichten des dreischichtigen Films bildet und die zentrale Schicht durch die passive Barriereschicht (B) (Struktur A/B/A) ausgebildet ist; oder
ii) die richtungslose amorphe PET-Schicht (A) die zentrale Schicht des dreischichtigen Films bildet und jede der äußeren Schichten durch die passive Barriereschicht (B) (Struktur B/A/B) ausgebildet ist;
das Gewichtsverhältnis zwischen der zentralen Schicht und der Summe der äußeren Schichten > 1 ist, wobei der mehrschichtige Film zumindest 90 Gewichtsprozent des richtungslosen amorphen PET aufweist und eine Permeabilität bei Sauerstoff (Oxygen Transmission Rate "OTR") von weniger als 7 cc/m²/24h/atm, eine Permeabilität bei Kohlendioxid ("CO₂TR") von weniger als 12 cc/m²/24h/atm und einen Haze-Wert von weniger als 10% aufweist, wobei die passive Barriereschicht (B) richtungsloses amorphes PET und ein Polyamid aufweist, das im Wesentlichen frei von Kompatibilisatoren des PET mit dem Polyamid ist.

2. Mehrschichtiger Film nach Anspruch 1, **dadurch gekennzeichnet, dass** die zentrale Schicht zumindest 60 Gewichtsprozent des dreischichtigen Films und vorzugsweise zumindest 80 Gewichtsprozent des dreischichtigen Films ausmacht.

3. Mehrschichtiger Film nach Anspruch 1, **dadurch gekennzeichnet, dass** in der Barriereschicht (B) das Polyamid in einer Menge zwischen 5 und 15 Gewichtsprozent, vorzugsweise zwischen 7 und 12 Gewichtsprozent, vorhanden ist.

4. Mehrschichtiger Film nach Anspruch 1, **dadurch gekennzeichnet, dass** das Polyamid ein teilweise aromatisches Polyamid ist, in dem die Amid-Bindung zumindest einen aromatischen Ring und eine nicht-aromatische Gruppe enthält.

5. Mehrschichtiger Film nach Anspruch 1, **dadurch gekennzeichnet, dass** die Barriereschicht (B) Additive aufweist, die aus kristallinen Mineralen mit einer plattenförmigen Struktur, die Platten mit mikrometrischer oder nanometrischer Größe und ein Längen-/Breiten-Verhältnis L/w ≥ 200, vorhanden in einer Menge zwischen 0,1 und 8 Gewichtsprozent, aufweisen, bestehen.

6. Mehrschichtiger Film nach Anspruch 1, **gekennzeichnet durch** eine Permeabilität bei Sauerstoff ("OTR") von weniger als 5 cc/m²/24h/atm und eine Permeabilität bei Kohlendioxid ("CO₂TR") von weniger als 10 cc/m²/24h/atm.

7. Behälter, aufweisend einen mehrschichtigen Film nach einem der Ansprüche 1 bis 6.

8. Packung, aufweisend den Behälter nach Anspruch 7 und einen oberen Film, der auf dem Behälter wärmeversiegelbar ist.

9. Packung nach Anspruch 8, **dadurch gekennzeichnet, dass** der obere Film eine PET-, hochmodifizierte Co-PET- oder PETG-Schicht aufweist, die den Behälter berührt.

10. Packung nach Anspruch 8, **dadurch gekennzeichnet, dass** die Menge an PET ≥ 90 Gewichtsprozent beträgt und der obere Film eine Permeabilität bei Sauerstoff ("OTR") von weniger als 7 cc/m²/24h/atm, vorzugsweise von weniger als 5 cc/m²/24h/atm, idealerweise von weniger als 3 cc/m²/24h/atm aufweist.

11. Packung nach Anspruch 10, **dadurch gekennzeichnet, dass** der obere Film ein mehrschichtiger Film (dreischichtig/fünfschichtig) nach einem der Ansprüche 1 bis 6 ist.

12. Packung nach Anspruch 8, **dadurch gekennzeichnet, dass** der obere Film einen Haze-Wert von weniger als 10% aufweist.

## Revendications

1. Film multicouche constitué de matière thermoplastique recyclable comprenant au moins trois couches, **caractérisé par le fait qu'**au moins une couche (A) desdites trois couches est essentiellement constituée de PET amorphe non orienté et est combinée avec au moins une couche formant une barrière passive (B) comprenant le PET amorphe non orienté et de 1 à 20 % en poids d'un polyamide sensiblement exempt de catalyseurs d'oxydation, dans lequel :
i) ladite couche de PET amorphe non orienté (A) constitue chacune des couches externes dudit film à trois couches et la couche centrale est constituée de ladite couche formant une barrière passive (B) (structure AB/A) ; ou
ii) ladite couche de PET amorphe non orienté (A) constitue la couche centrale dudit film à trois couches et chacune desdites couches externes est constituée de ladite couche formant une barrière passive (B) (structure B/A/B) ;
le rapport pondéral entre ladite couche centrale et la somme desdites couches externes étant > 1, ledit film multicouche comprenant au moins 90 % en poids de PET amorphe non orienté et ayant une perméabilité à l'oxygène *(taux de transmission de l'oxygène* « OTR ») inférieure à 7 cm³/m²/24 h/atm, une perméabilité au dioxyde de carbone (« CO₂TR ») inférieure à 12 cm³/m²/24 h/atm et une valeur de trouble inférieure à 10 %, ladite couche formant une barrière passive (B) comprenant le PET amorphe non orienté et un polyamide étant sensiblement exempt d'agents de compatibilisation du PET avec le polyamide.

2. Film multicouche selon la revendication 1, **caractérisé par le fait que** ladite couche centrale représente au moins 60 % en poids du film à trois couches, de préférence au moins 80 % en poids du film à trois couches.

3. Film multicouche selon la revendication 1, **caractérisé par le fait que** dans ladite couche formant barrière (B) ledit polyamide est présent en une quantité de 5 % à 15 % en poids, de préférence de 7 % à 12 % en poids

4. Film multicouche selon la revendication 1, **caractérisé par le fait que** ledit polyamide est un polyamide partiellement aromatique dans lequel la liaison amide contient au moins un noyau aromatique et un groupe non aromatique.

5. Film multicouche selon la revendication 1, **caractérisé par le fait que** ladite couche formant barrière (B) comprend des additifs constitués de minéraux cristallins ayant une structure en forme de plaque ayant des plaques de taille micrométrique ou nanométrique et un rapport longueur/largeur L/1 ≥ 200, présents en une quantité de 0,1 à 8 % en poids.

6. Film multicouche selon la revendication 1, **caractérisé par** une perméabilité à l'oxygène (« OTR ») inférieure à 5 cm³/m²/24 h/atm et une perméabilité au dioxyde de carbone (« CO₂TR ») inférieure à 10 cm³/m²/24 h/atm.

7. Récipient comprenant un film multicouche selon l'une quelconque des revendications 1 à 6.

8. Emballage comprenant le récipient selon la revendication 7 et un film supérieur thermocollable sur ledit récipient.

9. Emballage selon la revendication 8, **caractérisé par le fait que** ledit film supérieur comprend une couche de PET, de Co-PET hautement modifié ou de PETG en contact avec ledit récipient.

10. Emballage selon la revendication 8, **caractérisé par le fait que** la quantité de PET est ≥ 90 % en poids et ledit film supérieur a une perméabilité à l'oxygène (« OTR ») inférieure à 7 cm³/m²/24 h/atm, de préférence inférieure à 5 cm³/m²/24 h/atm, plus préférablement inférieure à 3 cm³/m²/24 h/atm.

11. Emballage selon la revendication 10, **caractérisé par le fait que** ledit film supérieur est un film multicouche (film à trois couches/à cinq couches) selon l'une quelconque des revendications 1 à 6.

12. Emballage selon la revendication 8, **caractérisé par le fait que** ledit film supérieur a une valeur de trouble inférieure à 10 %.
